(19) Europäisches Patentamt
European Patent Office
Office européen des brevets

(11) Publication number: **0 291 884 B1**

(12) **EUROPEAN PATENT SPECIFICATION**

(45) Date of publication of patent specification: **02.01.92**

(51) Int. Cl.[5]: **C09K 19/40**, C08G 77/38

(21) Application number: **88107748.1**

(22) Date of filing: **13.05.88**

(54) **Organopolysiloxanes which exhibit liquid crystallinity at low temperatures, and a method for their preparation.**

(30) Priority: **14.05.87 JP 117975/87**

(43) Date of publication of application:
**23.11.88 Bulletin 88/47**

(45) Publication of the grant of the patent:
**02.01.92 Bulletin 92/01**

(84) Designated Contracting States:
**BE DE FR GB**

(56) References cited:
**EP-A- 0 163 495**

**POLYM. PREPRINTS (AM. CHEM. SOC., DIV. POLYM. CHEM.), vol. 24, no. 2, August 1983, page 257; R.C. ALLEN et al.: "Synthesis and characterization of poly(dimethylsiloxane) based liquid crystals"**

**MAKROMOLEKULARE CHEMIE, RAPID COMMUNICATIONS, vol. 3, 1982, pages 557-562, Basel, DE; H. RINGSDORF et al.: "Liquid crystalline side chain polymers with low glass transition temperatures"**

**J. OF POLYMER SCIENCE, vol. 16, no. 8, August 1978, pages 1929-1941, John Wiley & Sons, Inc.; M.O. RILEY et al.: "Synthesis and property comparisons of random and alternating hybrid fluorocarbon-fluorsilicone copolymers"**

(73) Proprietor: **TORAY SILICONE COMPANY, LIMITED**
**2-3-16, Muro-machi Nihonbashi**
**Chuo-ku Tokyo 103(JP)**

(72) Inventor: **Suzuki, Toshio**
**4-14-3 Kuranamadai Sodegaura**
**Kimitsu-gun Chiba Prefecture(JP)**
Inventor: **Okawa, Tadashi**
**1-6 Yushudai Nishi Inchihara-shi**
**Chiba Prefecture(JP)**

(74) Representative: **Spott, Gottfried, Dr. et al**
**Patentanwälte Spott und Puschmann**
**Sendlinger-Tor-Platz 11**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to organopolysiloxanes which exhibit liquid crystallinity at relatively low temperatures, i. e., at around room temperature, and to a method for their preparation.

A number of organic compounds exhibiting liquid crystallinity within particular temperature ranges are known in the art. A number of macromolecules exhibiting liquid crystallinity are also known in the prior art. These materials contain groups exhibiting liquid crystallinity which can be in the main chain or can be pendant groups on the main chain. Liquid-crystalline organopolysiloxanes have been disclosed in Japanese OPI Numbers 56-79173, 57-165480 and 60-252486. Japanese OPI Number 56-79173 describes linear organopolysiloxanes having pendant mesogenic groups, similarly, cyclic organopolysiloxanes are described in Japanese OPI Number 57-165480, and branched organopolysiloxanes are described in Japanese OPI Number 60-252486.

However, as a general matter, these prior art organopolysiloxanes evidence liquid crystallinity at relatively high temperatures, and liquid crystallinity does not appear without strong heating.

Thus, contemplated in this invention are liquid-crystalline organopolysiloxanes which exhibit liquid crystallinity at low temperatures, said organopolysiloxanes having at least one unit having the formula $R^1R^2SiO$, wherein $R^1$ is a fluorine-substituted alkyl group and $R^2$ is an alkyl radical containing from 1 to 10 carbon atoms, and at least one unit having the formula $R^3R^4SiO$ wherein $R^3$ is a mesogenic group and $R^4$ is an alkyl radical containing from 1 to 10 carbon atoms.

Thus, for purposes of this invention, each molecule of the linear liquid-crystalline organopolysiloxane of the present invention must contain at least one $R^1R^2SiO$ unit and at least one $R^3R^4SiO$ unit, and may additionally contain $R^5{}_2SiO$ units and $R^5{}_3SiO_{0.5}$ units, wherein $R^5$ is selected from alkyl groups, alkoxy groups, alkenyl groups, aryl groups, aralkyl groups, the hydrogen atom, the hydroxyl group, and mesogenic groups as defined herein.

Each molecule of the organopolysiloxane of the present invention must contain at least one $R^1R^2SiO$ unit, as an essential unit. In order to achieve good liquid crystallinity at low temperatures, it is preferred that the siloxane contain at least 10 mol% of the $R^1R^2SiO$ units. Preferred for this invention are siloxanes wherein $R^1$ represents a fluorine-containing alkyl group. It is most preferred that $R^1$ is a group with the general formula $C_nF_{2n+1}(CH_2)_m$-- in which n is 1 to 20 and m is 1 to 10.

From an economic standpoint, the selection of trifluoropropyl as $R^1$ is most advantageous. $R^2$ is a lower alkyl group and encompasses alkyl groups having 10 or fewer carbon atoms, such as methyl, ethyl, propyl, and butyl. Methyl is most preferred from an economic standpoint.

The other essential unit of the organopolysiloxane of the present invention is the $R^3R^4SiO$ unit, wherein at least one such unit must be present in each molecule. In order to generate good liquid crystallinity, it is preferred that this unit be at least 30 mol% of the total siloxane units. $R^4$ in this unit is a lower alkyl group, as described for $R^2$. Methyl is again most preferred from the standpoint of economics.

The mesogenic group represented by $R^3$ is a group, as known from the art, which imparts liquid crystallinity. The mesogenic molecule in this group is bonded to silicon through suitable linking groups, and examples of these linking groups are alkylene groups such as $-(CH_2)_p-$ and $-CH(CH_3)-(CH_2)_p-$, wherein p and q are at least one but not greater than 20, and the alkyleneoxy groups formed by the bonding of an oxygen atom to such alkylene groups. The mesogenic molecules can be exemplified by phenyl benzoate, biphenyl benzoate, biphenyl, benzylideneaniline, azoxybenzene, azobenzene, Schiff's bases, cyclohexyl phenyl ether, cyclohexylbenzene, phenyl cyclohexylcarboxylate, cholesterol, cholestane, and their derivatives. When polar groups such as alkoxy groups or the nitrile group are bonded in such mesogenic molecules, as is frequently done with the mesogenic monomer, one can then obtain special effects, such as dielectric anisotropy. Furthermore, a single organopolysiloxane molecule can contain two or more types of mesogenic groups, which is often useful for achieving good liquid-crystalline properties.

Preferred for this invention are linear liquid-crystalline organopolysiloxanes having trifluoropropyl as $R^1$, $R^3$ is an organic group having a substituted or unsubstituted biphenyl moiety, each $R^2$ and $R^4$ are methyl, and the average molecular weight is 500 to 100,000.

The liquid-crystalline organopolysiloxanes of the present invention are readily prepared through an addition reaction, in the presence of a platinum-type catalyst, by contacting an alkenyl-substituted mesogenic compound and a linear organopolysiloxane having as essential components at least one $R^1R^2SiO$ unit and at least one $R^4HSiO$ unit in each molecule.

Thus, one method for preparing liquid-crystalline organopolysiloxanes which exhibit liquid crystallinity at low temperatures, is a method which comprises contacting an alkenyl-substituted mesogenic compund with an organopolyxiloxane having at least one $R^1R^2SiO$ unit and at least one siloxane unit having the unit formula $R^4HSiO$, wherein $R^1$ is a fluorine-substituted alkyl group and $R^2$ is an alkyl radical containing from 1

to 10 carbon atoms, and $R^4$ is an alkyl radical having from 1 to 10 carbons, in the presence of an addition reaction catalyst for a time sufficient to effect the addition reaction and, recovering the organopolysiloxane.

In this method, the polysiloxanes used as starting materials are prepared by an equilibration polymerization, in the presence of an acid catalyst, using a low-molecular-weight cyclic or linear organopolysiloxane oligomers consisting of $R^1R^2SiO$ units and organohydrogenpolysiloxane oligomers consisting of $R^4HSiO$ units. Methods for the preparation of alkenyl-substituted mesogenic compounds are known, for example, as described in Japanese OPI Number 56-79173. With regard to the catalyst for this addition reaction, effective use is made of the platinum-type catalysts generally used in hydrosilylation reactions. Preferred examples are chloroplatinic acid and its alcohol solutions, platinum-olefin complexes, and complexes of platinum and vinyl-containing siloxanes.

The addition reaction is preferably carried out in a suitable solvent, but may also be conducted in the absence of solvent. Such solvents are exemplified by aromatic solvents such as benzene, toluene, and xylene; aliphatic solvents such as hexane and heptane; ethers such as tetrahydrofuran and diethyl ether; alcohols such as methanol, ethanol, propanol, and butanol; ketones such as acetone and methyl ethyl ketone; esters such as ethyl acetate and butyl acetate; chlorinated hydrocarbons such as carbon tetrachloride, trichloroethane, and chloroform; and by dimethylformamide and dimethyl sulfoxide. While the reaction can be carried out at room temperature, it is advantageously conducted at temperatures in the range from 50 to 200 degrees Centigrade.

Examples

In the examples, parts are parts by weight. To evaluate the liquid crystallinity, the sample was placed between two crossed polarizing plates, and the light transmission was observed microscopically while varying the temperature. In the examples, the liquid-crystalline region is given by two points: the boundary temperature between the solid phase and a fluid liquid-crystalline state, and the boundary temperature between the liquid-crystalline state and the isotropic liquid.

Example 1

Fifteen parts octamethylcyclotetrasiloxane, 48 parts tetramethyltetrakis-(trifluoropropyl)-cyclotetrasiloxane, 44 parts tetramethylcyclotetrasiloxane, 14 parts tetramethyldisiloxane, and 0.1 part trifluoromethanesulfonic acid as catalyst were placed in a four-necked flask, and a reaction was carried out at 100 degrees Centigrade for 8 hours. After cooling, the mixture was neutralized with sodium bicarbonate and filtered. Unreacted material was removed by evaporation in vacuo to afford a transparent polymer. This polymer (FP-1) was confirmed, by gel permeation chromatography (GPC), infrared spectral analysis (IR), nuclear magnetic resonance (NMR), and SiH titrimetry, to have the structure expressed by the following average formula.

$$H{-}{-}\underset{CH_3}{\overset{CH_3}{Si}}O{-}{-}(\underset{CH_3}{\overset{CH_3}{Si}}O)_2{-}{-}(\underset{C_2H_4CF_3}{\overset{CH_3}{Si}}O)_3{-}{-}(\underset{H}{\overset{CH_3}{Si}}O)_6{-}{-}\underset{CH_3}{\overset{CH_3}{Si}}{-}{-}H$$

Sixty-five parts FP-1, 100 parts p,p′-allyloxycyanobiphenyl, 1,000 parts toluene and platinum/tetramethyldivinyldisiloxane complex in an amount sufficient to give 200 ppm as platinum based on FP-1 were placed in a four-necked flask. After heating at reflux for 10 hours, a sample was taken and analyzed by IR, and it was found that the SiH peak had disappeared. Solvent removal by evaporation in vacuo afforded a pasty, light gray polymer. NMR analysis of this polymer confirmed that the p,p′-allyloxybiphenyl had been bonded to the FR-1 by an addition reaction with SiH. This organopolysiloxane exhibited liquid crystallinity within a temperature interval from below 25 degrees Centigrade to 65 degrees Centigrade.

Example 2

One hundred twenty parts of the partial hydrolysis condensate of methyl(trifluoropropyl)dimethoxysilane

(average molecular weight = 950), 50 parts trimethylsiloxy-terminated polymethylhydrogen siloxane having an average molecular weight of 2,600, 2.8 parts hexamethyldisiloxane, and 0.18 parts trifluoromethanesulfonic acid as catalyst were placed in a four-neck flask, and a reaction was conducted at 80 degrees Centigrade for 6 hours. After cooling, neutralization with sodium bicarbonate and filtration, the unreacted material was removed by evaporation in vacuo to afford a transparent polymer. This polymer (FP-2) had the structure with the average formula given below according to the results of gel permeation chromatography (GPC), infrared spectral analysis (IR), nuclear magnetic resonance (NMR), and SiH titrimetry.

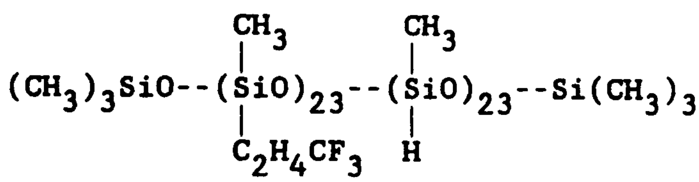

Twenty-five Parts FP-2, 26 parts p,p′-allyloxycyanobiphenyl, 400 parts toluene, and an isopropanol solution of chloroplatinic acid in an amount sufficient to give 100 ppm as platinum based on FP-2 were placed in a four-neck flask. After heating at reflux for 15 hours, a sample was taken, and the disappearance of the SiH peak was confirmed by IR. Removal of the solvent by evaporation in vacuo afforded a white syrupy polymer. Based on the results from NMR, it was confirmed for this polymer that the p,p′-allyloxycyanobiphenyl was bonded to the FP-2 by an addition reaction with the SiH. This organopolysiloxane exhibited liquid crystallinity within the temperature interval from below 25 degrees Centigrade to 70 degrees Centigrade.

Comparison Example 1

The following organopolysiloxane was prepared for comparison.

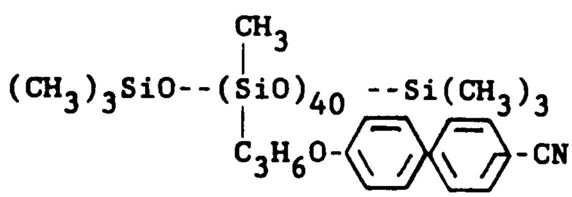

This organopolysiloxane demonstrated liquid crystallinity within the temperature interval from 128 degrees Centigrade to 160 degrees Centigrade.

Example 3

Twenty-eight parts FP-2, 42 parts biphenyl p-allyloxybenzoate, 400 parts toluene, and an isopropanol solution of chloroplatinic acid in a quantity sufficient to provide 150 ppm as platinum based on FP-2 were placed in a four-necked flask. After heating at reflux for 6 hours, a sample was taken, and it was confirmed by IR that the SiH peak had disappeared. The solvent was removed by evaporation in vacuo to afford a polymer in the form of a white powder. It was confirmed by NMR that the biphenyl p-allyloxybenzoate was bonded to the FP-2 by an addition reaction with SiH. This organopolysiloxane demonstrated liquid crystallinity within the temperature range from 125 degrees Centigrade to 141 degrees Centigrade.

Comparison Example 2

The following organopolysiloxane was prepared for comparison.

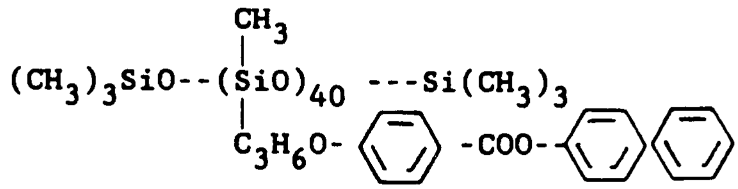

It demonstrated liquid crystallinity within the temperature interval from 145 degrees Centigrade to 182 degrees Centigrade.

As demonstrated by the examples and comparison examples, because the linear liquid-crystalline organopolysiloxane of the present invention contains in each molecule at least one fluorine-containing alkyl group and at least one mesogenic group, it characteristically demonstrates liquid crystallinity in lower temperature intervals than in the absence of the fluorine-containing alkyl group, and in many cases exhibits liquid crystallinity at temperatures as low as in the vicinity of room temperature. Furthermore, the invention's organopolysiloxane can be readily produced using a hydrosilylation reaction. By utilizing these properties, the liquid-crystalline organopolysiloxane of the present invention will be useful, for example, for the optical display of information and recording.

## Claims

1. Liquid-crystalline organopolysiloxanes which exhibit liquid crystallinity at low temperatures, said organopolysiloxanes having at least one unit having the formula

   $R^1R^2SiO$

   wherein $R^1$ is a fluorine-substituted alkyl group and $R^2$ is an alkyl radical containing from 1 to 10 carbon atoms, and at least one unit having the formula

   $R^3R^4SiO$

   wherein $R^3$ is a mesogenic group and $R^4$ is an alkyl radical containing from 1 to 10 carbon atoms.

2. A liquid-crystalline organopolysiloxane as claimed in claim 1 wherein the fluorine-substituted alkyl group has the unit formula $C_nF_{2n+1}(CH_2)_m$--, wherein n has a value of 1 to 20 and m has a value of 1 to 10.

3. A liquid-crystalline organopolysiloxane as claimed in claim 2, wherein $C_nF_{2n+1}(CH_2)_m$-- is trifluoropropyl.

4. A liquid-crystalline organopolysiloxane as claimed in claim 1, wherein $R^1$ is trifluoropropyl and $R^2$ is methyl.

5. A liquid-crystalline organopolysiloxane as claimed in claim 1 wherein $R^3$ is an organic group having a substituted biphenyl moiety and $R^4$ is the methyl group.

6. A liquid-crystalline organopolysiloxane as claimed in claim 1 wherein $R^3$ is an organic group having an unsubstituted biphenyl moiety and $R^4$ is the methyl group.

7. A liquid-crystalline organopolysiloxane as claimed in claim 1 wherein the average molecular weight of the organopolysiloxane is within the range of 500 to 100,000.

8. A method for preparing liquid-crystalline organopolysiloxanes which exhibit liquid crystallinity at low temperatures, said method comprising
   (I) contacting an alkenyl-substituted mesogenic compound with an organopolysiloxane having at least one $R^1R^2SiO$ unit and at least one siloxane unit having the unit formula $R^4HSiO$, wherein $R^1$ is a fluorine-substituted alkyl group, $R^2$ is an alkyl radical containing from 1 to 10 carbon atoms, and $R^4$ is an alkyl radical having from 1 to 10 carbons, in the presence of an addition reaction catalyst for a time sufficient to effect the addition reaction, and

(II) recovering the organopolysiloxane.

**9.** A method as claimed in claim 8 wherein the catalyst is a platinum catalyst.

## Revendications

**1.** Organopolysiloxanes liquides cristallins qui présentent une cristallinité liquide aux basses températures, lesdits organopolysiloxanes ayant au moins un motif de la formule

$R^1R^2SiO$

ou $R^1$ est un groupe alkyle fluoré et $R^3$ est un radical alkyle contenant de 1 à 10 atomes de carbone, et au moins un motif de la formule

$R^3R^4SiO$

ou $R^3$ est un groupe mésogène et $R^4$ est un radical alkyle contenant de 1 à 10 atomes de carbone.

**2.** Un orgonopolysiloxane liquide cristallin selon la revendication 1, dans lequel le groupe alkyle fluoré répond à la formule unitaire $C_nF_{2n+1}(CH_2)_m$--, où n vaut de 1 à 20 et m vaut de 1 à 10.

**3.** Un orgonopolysiloxane liquide cristallin selon la revendication 2, dans lequel $C_nF_{2n+1}(CH_2)_m$-- est un radical trifluoropropyle.

**4.** Un organopolysiloxane liquide cristallin selon la revendication 1, dans lequel $R^1$ est un radical trifluoropropyle et $R^2$ est un radical méthyle.

**5.** Un organopolysiloxane liquide cristallin selon la revendication 1, dans lequel $R^3$ est un groupe organique contenant un fragment biphényle substitué et $R^4$ est un groupe méthyle.

**6.** Un organopolysiloxane liquide cristallin selon la revendication 1, dans lequel $R^3$ est un groupe organique contenant un fragment biphényle non substitué et $R^4$ est le groupe méthyle.

**7.** Un organopolysiloxane liquide cristallin selon la revendication 1, dans lequel le poids moléculaire moyen de l'organopolysiloxane est compris dans la gamme de 500 à 100 000.

**8.** Un procédé de préparation d'organopolysiloxanes liquides cristallins qui présente une cristallinité liquide aux basses températures, ce procédé comprenant :

(I) la mise en contact d'un composé mésogène Substitué par un radical alcényle avec un organopolysiloxane ayant au moins un motif $R^1R^2SiO$ et au moins un motif siloxane ayant la formule unitaire $R^4HSiO$, où $R^1$ est un groupe alkyle fluoré, $R^2$ est un radical alkyle contenant de 1 à 10 atomes de carbone, et $R^4$ est un radical alkyle ayant de 1 à 10 atomes de carbone, en présence d'un catalyseur de réaction d'addition pendant un temps suffisant pour effectuer la réaction d'addition, et

(II) la récupération de l'organopolysiloxane.

**9.** Un procédé selon la revendication 8, dans lequel le catalyseur est un catalyseur au platine.

## Patentansprüche

**1.** Flüssigkristalline Organopolysiloxane, die bei niedrigen Temperaturen flüssig kristallin sind, wobei die Organopolysiloxane mindestens eine Einheit mit der Formel

$R^1R^2SiO$

haben, wobei $R^1$ eine fluorsubstituierte Alkylgruppe ist und $R^2$ ein Alkylrest ist, der 1 bis 10 Kohlenstoffatome enthält, und mindestens eine Einheit mit der Formel

$R^3R^4SiO$

haben, worin $R^3$ eine mesogene Gruppe und $R^4$ ein Alkylrest mit 1 bis 10 Kohlenstoffatomen ist.

**2.** Flüssigkristallines Organopolysiloxan nach Anspruch 1, worin die fluorsubstituierte Alkylgruppe die Einheitsformel

$C_nF_{2n+1}(CH_2)_m$--

hat, worin n einen Wert von 1 bis 20 und m einen Wert von 1 bis 10 hat.

**3.** Flüssigkristallines Organopolysiloxan nach Anspruch 2, worin $C_nF_{2n+1}(CH_2)_m$-- ein Trifluorpropylrest ist.

**4.** Flüssigkristallines Organopolysiloxan nach Anspruch 1, worin $R^1$ ein Trifluorpropylrest und $R^2$ ein Methylrest ist.

**5.** Flüssigkristallines Organopolysiloxan nach Anspruch 1, worin $R^3$ eine organische Gruppe mit einem substituierten Biphenylrest und $R^4$ eine Methylgruppe ist.

**6.** Flüssigkristallines Organopolysiloxan nach Anspruch 1, worin $R^3$ eine organische Gruppe mit einem unsubstituierten Biphenylrest und $R^4$ die Methylgruppe ist.

**7.** Flüssigkristallines Organopolysiloxan nach Anspruch 1, worin das durchschnittliche Molekulargewicht des Organopolysiloxans im Bereich von 500 bis 100 000 liegt.

**8.** Verfahren zur Herstellung eines flüssigkristallinen Organopolysiloxans, das bei niedrigen Temperaturen flüssigkristallin ist, wobei das Verfahren umfaßt, daß man

(I) eine alkenylsubstituierte mesogene Verbindung mit einem Organopolysiloxan mit mindestens einer $R^1R^2SiO$-Einheit und mindestens einer Siloxaneinheit der Einheitsformel $R^4HSiO$, worin $R^1$ eine fluorsubstituierte Alkylgruppe, $R^2$ ein Alkylrest mit 1 bis 10 Kohlenstoffatomen und $R^4$ ein Alkylrest mit 1 bis 10 Kohlenstoffatomen ist, in Gegenwart eines Additionsreaktionskatalysators für einen solchen Zeitraum in Kontakt bringt, der ausreicht, um die Additionsreaktion zu bewirken, und
(II) das Organopolysiloxan gewinnt.

**9.** Verfahren nach Anspruch 8, worin der Katalysator ein Platinkatalysator ist.